# EUROPÄISCHE PATENTANMELDUNG

(11) **EP 4 016 808 A1**
(43) Veröffentlichungstag der Anmeldung: **22.06.2022**
(21) Anmeldenummer: 20215440.7
(22) Anmeldetag: 18.12.2020
(51) Int. Cl.: H02K 7/06, H02K 7/11, H02K 49/10

(54) **LINEARES FÜHRUNGSSYSTEM**

(71) Anmelder: Accuride International GmbH, 65582 Diez/Lahn (DE)
(72) Erfinder: Satony, Christian, 56182 Urbar (DE); Neuhaus, Christoph, 56412 Niederelbert (DE)
(74) Vertreter: WSL Patentanwälte Partnerschaft mbB

(57) **Zusammenfassung**

Die vorliegende Erfindung betrifft ein lineares Führungssystem mit mindestens einem ersten Schienenelement und einem zweiten Schienenelement, wobei das erste Schienenelement und das zweite Schienenelement in und entgegen einer Auszugsrichtung linear gegeneinander verschiebbar aneinander gelagert sind, einem Elektromotor, einer Antriebswelle, wobei die Antriebswelle derart wirksam mit dem Elektromotor gekoppelt ist, dass der Elektromotor in einem Betrieb des linearen Führungssystems die Antriebswelle in eine Rotationsbewegung versetzt, einem Linearantrieb, wobei der Linearantrieb eine Abtriebswelle aufweist und wobei der Linearantrieb derart ausgestaltet ist, dass eine Drehbewegung der Abtriebswelle eine lineare Bewegung der ersten und zweiten Schienenelemente in oder entgegen der Auszugsrichtung relativ zueinander bewirkt, und einer Kupplung, wobei die Kupplung die Antriebswelle und die Abtriebswelle derart miteinander verbindet, dass die Kupplung einen Drehmoment von der Antriebswelle auf die Abtriebswelle überträgt, wobei die Kupplung eine Magnetkupplung ist. Dabei weist die Magnetkupplung ein erstes und ein zweites Kupplungselement auf, wobei das erste Kupplungselement drehmomentfest mit der Antriebswelle verbunden ist und das zweite Kupplungselement drehmomentfest mit der Abtriebswelle verbunden ist.

## Beschreibung

Die vorliegende Erfindung betrifft ein lineares Führungssystem mit mindestens einem ersten Schienenelement und einem zweiten Schienenelement, wobei das erste Schienenelement und das zweite Schienenelement in und entgegen einer Auszugsrichtung linear gegeneinander verschiebbar aneinander gelagert sind, einem Elektromotor, einer Antriebswelle, wobei die Antriebswelle derart wirksam mit dem Elektromotor gekoppelt ist, dass der Elektromotor in einem Betrieb des linearen Führungssystems die Antriebswelle in eine Rotationsbewegung versetzt, einem Linearantrieb, wobei der Linearantrieb eine Abtriebswelle aufweist und wobei der Linearantrieb derart ausgestaltet ist, dass eine Drehbewegung der Abtriebswelle eine lineare Bewegung der ersten und zweiten Schienenelemente in oder entgegen der Auszugsrichtung relativ zueinander bewirkt, und einer Kupplung, wobei die Kupplung die Antriebswelle und die Abtriebswelle derart miteinander verbindet, dass die Kupplung einen Drehmoment von der Antriebswelle auf die Abtriebswelle überträgt.

Lineare Führungssysteme, insbesondere Teleskopschienen, mit mindestens zwei Schienenelementen und gegebenenfalls einem Wälzkörperkäfig mit darin aufgenommenen Wälzkörpern zur Reduzierung der Reibung zwischen den Schienenelementen sind in mannigfaltigen Ausführungsformen aus dem Stand der Technik bekannt. Sie werden in verschiedenen Haushaltsgeräten, aber auch im Automobilbau und in vielen weiteren Anwendungen eingesetzt. In einer Vielzahl von Anwendungsbereichen kommen bereits lineare Führungssysteme zum Einsatz, die motorisch angetrieben sind. Dabei wird in der Regel ein wellenbasierter Linearantrieb verwendet. Ein solcher setzt eine Drehbewegung einer Welle in eine Linearbewegung der Schienenelemente relativ zueinander um.

Als problematisch hat sich herausgestellt, dass motorisch angetriebene lineare Führungssysteme eine aufwändige Steuerung verlangen, um bei Hindernissen im Auszugsweg des von dem linearen Führungssystem bewegten Elements, beispielsweise einer Schublade, eine Beschädigung, eine Überlastsituation des Antriebs oder gar eine Verletzung eines Bedieners zu vermeiden. Darüber hinaus ist die drehmomentfeste Verbindung zwischen der Motorwelle des Elektromotors und der Abtriebswelle des Linearantriebs bei der Produktion der Teleskopschienen ein aufwendiger Schritt.

Demgegenüber liegt der vorliegenden Erfindung die Aufgabe zugrunde, ein lineares Führungssystem bereitzustellen, welches zumindest einen der zuvor genannten Nachteile verringert oder vermeidet.

Zumindest eine der zuvor genannten Aufgaben wird durch ein lineares Führungssystem gemäß dem unabhängigen Anspruch gelöst. Erfindungsgemäß wird somit vorgeschlagen, ein lineares Führungssystem der eingangs genannten Art derart auszugestalten, dass die Kupplung eine Magnetkupplung ist. Dabei weist die Magnetkupplung ein erstes und ein zweites Kupplungselement auf, wobei das erste Kupplungselement drehmomentfest mit der Antriebswelle verbunden ist und das zweite Kupplungselement drehmomentfest mit der Abtriebswelle verbunden ist.

Der vorliegenden Erfindung liegt die Idee zugrunde, eine Magnetkupplung zur Drehmomentübertragung von der mit dem Elektromotor, insbesondere mit einer Motorwelle des Elektromotors, gekoppelten Antriebswelle auf die Abtriebswelle des Linearantriebs zu verwenden. Eine solche Magnetkupplung hat den Vorteil, dass die Kupplung selbst einen Überlastschutz bereitstellt. Eine magnetische Kraft zwischen dem ersten und dem zweiten Kupplungselement bewirkt eine Begrenzung der Drehmomentübertragung. Wird beispielsweise das angetriebene Schienenelement blockiert, so rutscht die Magnetkupplung durch. Das mit der Antriebswelle verbundene Kupplungselement dreht sich weiterhin, überträgt aber kein Drehmoment mehr auf das mit der Abtriebswelle verbundene Kupplungselement. Die Magnetkupplung bildet eine Rutschkupplung, die bei Übersteigen eines gewissen Gegendrehmoments der Abtriebswelle gegenüber dem von dem Elektromotor aufgebrachten Drehmoment der Antriebswelle durchrutscht.

Auf diese Weise wird ein Überlastschutz für das angetriebene lineare Führungssystem und ggf. ein Klemmschutz bereitgestellt.

Darüber hinaus ermöglicht die Magnetkupplung eine schnelle Montage in der Fertigung. Die Abtriebswelle des Linearantriebs kann mit dem entsprechenden zweiten Kupplungselement vorkonfektioniert werden ebenso wie die Antriebswelle oder ggf. der Motor zusammen mit der Antriebswelle mit dem ersten Kupplungselement. Bei der Montage wird in einer Ausführungsform der Motor angeflanscht und die beiden Wellen sind bei entsprechender Positionierung unmittelbar miteinander verbunden, sodass ein Drehmoment zwischen ihnen übertragbar ist.

In einer Ausführungsform der Erfindung ist das lineare Führungssystem ausgewählt aus einer Gruppe bestehend aus einer Auszugsführung, einer Teleskopschiene und einer Linearführung. Dabei umfasst der Oberbegriff lineares Führungssystem Gleitführungen, eine Kugelführungen und Rollenführungen. Wenn im Sinne der vorliegenden Anmeldung von einem linearen Führungssystem die Rede ist, so ist dieser Begriff derart allgemein zu verstehen, dass nicht nur Schienen davon umfasst sind, bei welchem das erste Schienenelement und das zweite Schienenelement in etwa die gleiche Länge aufweisen, d.h. insbesondere Teleskopschienen, sondern auch Linearführungen, bei denen das zweite Schienenelement deutlich kürzer ist als das erste Schienenelement oder bei denen das erste oder das zweite Schienenelement von einem Rollwagen gebildet ist.

Im Sinne der vorliegenden Anmeldung wird unter der Auszugsrichtung die Richtung verstanden, in der das erste Schienenelement und das zweite Schienenelement relativ linear gegeneinander bewegt werden können, um von einer Einzugsposition in eine Auszugsposition zu gelangen. Entsprechend ist eine Richtung entgegen der Auszugsrichtung diejenige Richtung, in welche die ersten und zweiten Schienenelemente relativ zueinander bewegt werden, um wieder in die Einzugsposition zu gelangen.

Bei einer Teleskopschiene bezeichnet die Einzugsposition diejenige Position des ersten und des zweiten Schienenelements relativ zueinander, in welcher die Teleskopschiene vollständig eingeschoben ist. Die Auszugsposition bezeichnet dann diejenige Position des ersten und zweiten Schienenelements relativ zueinander, in welcher die Teleskopschiene maximal ausgezogen ist.

Wenn in der vorliegenden Anmeldung ausgeführt wird, dass das erfindungsgemäße lineare Führungssystem ein erstes Schienenelement und ein zweites Schienenelement aufweist, so schließt dies nicht aus, dass das lineare Führungssystem, insbesondere wenn es sich um eine Teleskopschiene handelt, weitere Schienenelemente, insbesondere drei Schienenelemente, beispielsweise zum Bereitstellen eines Vollauszugs, umfasst.

In einer Ausführungsform der Erfindung weisen das erste und das zweite Schienenelement jeweils zwei Laufflächen auf, wobei auf den zwei Laufflächen des ersten Schienenelements und auf den zwei Laufflächen des zweiten Schienenelements in einem Wälzkörperkäfig aufgenommene Wälzkörper angeordnet sind. Diese Wälzkörper rollen auf den jeweiligen Laufflächen ab und verringern eine Reibung zwischen dem ersten Schienenelement und dem zweiten Schienenelement. Unter einem Wälzkörper im Sinne der vorliegenden Anmeldung wird ein Rotationskörper verstanden, der als Element einer Führung die Reibung zwischen den verschiedenen Schienenelementen erheblich reduziert und damit eine Relativbewegung zweier Schienenelemente zueinander erleichtert. Wälzkörper sind beispielsweise Kugeln, Rollen, Tonnen, Nadeln oder Kegel.

In einer Ausführungsform der vorliegenden Erfindung sind die Wälzkörper Kugeln. Es versteht sich, dass in diesem Fall der Wälzkörperkäfig ein Kugelkäfig ist.

In einer Ausführung der Erfindung ist zumindest das erste Schienenelement oder das zweite Schienenelement aus einem Material gefertigt, dass ausgewählt ist aus einer Gruppe bestehend aus Stahlblech, aluminiertem Stahlblech und Edelstahl.

Ein Elektromotor im Sinne der vorliegenden Erfindung ist ein Motor mit einer sich drehenden Motorwelle zum Bereitstellen eines Drehmoments. In einer Ausführungsform der Erfindung ist der Elektromotor ausgewählt aus einer Gruppe bestehend aus einem Schrittmotor, einem bürstenlosen Gleichstrommotor (BLDC) oder einem bürstenbehafteten Gleichstrommotor (DC).

Im Sinne der vorliegenden Erfindung ist der Elektromotor wirksam mit der Antriebswelle gekoppelt. Mit dieser Kopplung geht einher, dass in einem Betrieb des linearen Führungssystems der Motor die Antriebswelle in eine Dreh-oder Rotationsbewegung versetzt. Um die erforderliche Drehmomentkopplung zwischen dem Elektromotor und der Antriebswelle bereitzustellen, kann eine Motorwelle des Elektromotors über ein Getriebe oder eine Kupplung an die Antriebswelle gekoppelt sein. In einer Ausführungsform jedoch ist die Antriebswelle zugleich die Motorwelle des Elektromotors.

Linearantriebe im Sinne der vorliegenden Erfindung umfassen wellenbasierte Linearantriebe, bei denen eine Drehbewegung einer Welle, nämlich der Abtriebswelle im Sinne der vorliegenden Anmeldung, in eine lineare Relativbewegung der ersten und zweiten Schienenelemente in oder entgegen der Auszugsrichtung zueinander bewirkt wird. In einer Ausführungsform der Erfindung ist der Linearantrieb ausgewählt aus einer Gruppe bestehend aus einem Riementrieb, einem Zahnstangentrieb und einem Spindeltrieb. Bei einem Riementrieb treibt die Abtriebswelle ein den Riemen antreibendes Riemenrad. Bei einem Zahnstangenantrieb treibt die Abtriebswelle ein die Zahnstange kämmendes Zahnrad. Bei einem Spindeltrieb treibt die Abtriebswelle eine Gewindespindel oder sie wird von der Gewindespindel gebildet.

Wenn im Sinne der vorliegenden Anmeldung die Welle des Linearantriebs als "Abtriebswelle" bezeichnet wird, so steht diese Bezeichnung in inhaltlichem Zusammenhang zu der erfindungsgemäßen Kupplung. Bei der Kupplung gibt es eine Antriebswelle, welche das Drehmoment in die Kupplung eingeleitet und eine Abtriebswelle, welche das Drehmoment aus der Kupplung ausleitet. Diese Abtriebswelle bildet die Welle des Linearantriebs.

In einer Ausführungsform der Erfindung, bei welcher der Linearantrieb ein Spindeltrieb ist, weist der Spindeltrieb eine Gewindespindel und eine auf der Gewindespindel laufenden Spindelmutter auf. Dabei ist die Spindelmutter mit dem ersten oder dem zweiten Schienenelement verbunden, sodass die Spindelmutter bei einer Drehbewegung der Gewindespindel das erste oder zweite Schienenelement mitnimmt. Dabei ist die Gewindespindel ortsfest in Bezug auf das nicht mit der Spindelmutter verbundene Schienenelement. In einer Ausführungsform werden die Abtriebswelle und die Gewindespindel von einem einzigen Bauelement gebildet.

Wenn im Sinne der vorliegenden Erfindung ausgeführt wird, dass zwei Elemente drehmomentfest miteinander verbunden sind, so bezeichnet dies eine Verbindung, bei welcher ein Drehmoment ohne Verlust oder Schlupf von dem einen Element auf das andere übertragbar ist, solange die Elemente nicht in ihrer Funktion beeinträchtigt sind oder zerstört werden. So ist das erste Kupplungselement drehmomentfest mit der Antriebswelle verbunden. Solange das erste Kupplungselement und die Antriebswelle nicht zerstört werden, führt eine Drehbewegung der Antriebswelle zu einer Drehbewegung des ersten Kupplungselements mit der gleichen Winkelgeschwindigkeit und ohne Drehmomentverlust. Ebenso ist das zweite Kupplungselement drehmomentfest mit der Abtriebswelle verbunden. Eine Drehbewegung des zweiten Kupplungselements führt zu einer Drehbewegung der Abtriebswelle mit gleicher Winkelgeschwindigkeit ohne Schlupf und ohne Drehmomentverlust.

In einer Ausführungsform der Erfindung umfasst zumindest das erste Kupplungselement oder das zweite Kupplungselement einen Permanentmagneten. In einer Ausführungsform sind Permanentmagnete sowohl an dem ersten Kupplungselement als auch an dem zweiten Kupplungselement vorgesehen. Während Permanentmagnete aufgrund ihrer Bauform und der geringen Kosten für viele Anwendungen die erste Wahl sind, schließt die vorliegende Erfindung nicht aus, dass beispielsweise ein Elektromagnet für die Kupplung verwendet wird.

Es ist möglich, die erfindungsgemäße Magnetkupplung in einer Ausführungsform derart auszubilden, dass das erste Kupplungselement und das zweite Kupplungselement auch während des Betriebs der Teleskopschiene immer einen hinreichenden Abstand voneinander aufweisen, sodass sie nicht miteinander mechanisch in Eingriff oder Kontakt sind. Bei einer derartigen Realisierung ist ein Distanzspalt zwischen dem ersten Kupplungselement und dem zweiten Kupplungselement vorgesehen. Die Drehmomentübertragung von dem ersten Kupplungselement auf das zweite Kupplungselement erfolgt in einer solchen Ausführungsform ausschließlich über die zwischen den Kupplungselementen wirkenden magnetischen Kräfte. Es versteht sich, dass in einer solchen Ausführungsform vorzugsweise das erste Kupplungselement und das zweite Kupplungselement eine Mehrzahl von Permanentmagneten aufweisen, deren Polungen derart ausgestaltet und angeordnet sind, dass eine Drehmomentübertragung zwischen dem ersten und dem zweiten Kupplungselement allein aufgrund der wirkenden magnetischen Kraft gewährleistet ist.

In einer Ausführungsform jedoch sind das erste Kupplungselement und das zweite Kupplungselement aufgrund der von einem Magneten ausgeübten magnetischen Kraft reibschlüssig miteinander in Eingriff. Durch eine in axialer Richtung wirkende magnetische Anziehungskraft zwischen dem ersten Kupplungselement und dem zweiten Kupplungselement wird ein Kraftschluss, insbesondere ein Reibschluss zwischen den beiden Kupplungselementen bereitgestellt.

Durch den Kraft- bzw. Reibschluss zwischen den beiden Kupplungselementen, der aufgrund der magnetischen Kraft bereitgestellt wird, wird in einer Ausführungsform auf einfache Weise ein ohne Schlupf der Kupplung von der Motorwelle auf die Antriebswelle übertragenes maximales Drehmoment definiert. Übersteigt das Drehmoment der Motorwelle das so definierte maximale Drehmoment, so rutscht die Kupplung durch. Bei spaltbehafteten Magnetkupplungen, so wie sie eingangs dargestellt wurden, erfordert die Definition des Gegendrehmoments hingegen eine aufwändigere Konstruktion und Berechnung.

In einer Ausführungsform sind das erste Kupplungselement und das zweite Kupplungselement ausschließlich reibschlüssig miteinander in Eingriff. In einer solchen Ausführungsform gibt es keinen Formschluss zwischen dem ersten und dem zweiten Kupplungselement, welcher ein Drehmoment von der Motorwelle auf die Antriebswelle übertragen würde.

Es sind jedoch Ausführungsformen denkbar, in denen die Kupplungselemente reibschlüssig und formschlüssig miteinander verbunden sind, sodass sowohl der Reibschluss als auch der Formschluss einer Drehmomentübertragung dienen. Auch in einer solchen Ausführungsform kann durch eine geeignete Ausgestaltung des Formschlusses ein Schlupf der Kupplung bei Übersteigen eines maximalen Drehmoments gewährleistet werden.

In einer Ausführungsform der Erfindung wird der Reibschluss zwischen dem ersten Kupplungselement und dem zweiten Kupplungselement durch zwei miteinander mechanisch in Reibeingriff stehende Reibflächen bereitgestellt. Dazu weist in einer Ausführungsform der Erfindung das erste Kupplungselement eine erste Reibfläche auf und das zweite Kupplungselement weist eine zweite Reibfläche auf. In einer Ausführungsform ist die erste Reibfläche senkrecht zu der Motorwelle und die zweite Reibfläche ist senkrecht zu der Antriebswelle. Die erste Reibfläche und die zweite Reibfläche sind miteinander in Eingriff, sodass das Drehmoment durch einen Reibschluss, vorzugsweise ausschließlich durch einen Reibschluss, zwischen der ersten Reibfläche und der zweiten Reibfläche von der Motorwelle auf die Antriebswelle übertragen wird.

In einer Ausführungsform der Erfindung, bei welcher nur das erste Kupplungselement oder das zweite Kupplungselement einen Magneten aufweist, wird dieses Kupplungselement im Sinne der vorliegenden Anmeldung auch als Magnetanlaufscheibe bezeichnet und das andere Kupplungselement im Sinne der vorliegenden Anmeldung auch als Anlaufscheibe bezeichnet. In einer Ausführungsform mit einem Reibschluss zwischen dem ersten und dem zweite Kupplungselement lässt sich das ohne Schlupf der Kupplung übertragene maximale Drehmoment durch einfache Maßnahmen bei der Konstruktion der Magnetkupplung festlegen. Einen Einfluss auf das ohne Schlupf übertragene maximale Drehmoment hat neben der von dem mindestens einem Magneten bereitgestellten magnetischen Kraft in axialer Richtung die Ausgestaltung des tribologischen Systems aus dem ersten Kupplungselement und dem zweiten Kupplungselement. Die Reibung zwischen dem ersten Kupplungselement wird insbesondere bestimmt durch eine Ausdehnung der ersten und der zweiten Reibfläche, eine Oberflächenbeschaffenheit, insbesondere Rauheit, der ersten und der zweiten Reibfläche sowie durch das Material der Reibflächen.

In einer Ausführungsform der Erfindung, bei welcher zumindest das erste Kupplungselement oder das zweite Kupplungselement einen Permanentmagneten aufweist, ist dieser Permanentmagnet in einem Topf aus einem ferromagnetischen Material angeordnet. Ein solcher Topf dient dazu, die magnetischen Feldlinien des Permanentmagneten zu konzentrieren und so die in axialer Richtung auf das gegenüberliegende Kupplungselement ausgeübte Haltekraft zu erhöhen.

In einer Ausführungsform der Erfindung hat der Topf einen zu der jeweiligen Welle hin zeigenden Boden und im Wesentlichen zylindrische Seitenwände. Auf der der Welle abgewandten Seite ist der Topf offen und die Seitenwände weisen gegenüber einer Oberfläche des Magneten einen Überstand auf. So kommen nur die Seitenwände des Topfes, in denen sich die magnetischen Feldlinien konzentrieren, mit dem gegenüberliegenden Kupplungselement, insbesondere der Anlaufscheibe, in Reibeingriff. Die beiden miteinander in Reibeingriff stehenden Reibflächen sind in dieser Ausführungsform jeweils ringförmig.

In einer Ausführungsform der Erfindung ist das Material des Topfes so gewählt, dass die magnetische Kraft in axialer Richtung optimiert ist.

In einer Ausführungsform der Erfindung weist nur das erste Kupplungselement oder das zweite Kupplungselement einen Permanentmagneten auf, wobei der Permanentmagnet derart angeordnet ist, dass der Permanentmagnet sowohl abschnittsweise von ferromagnetischem Material des ersten Kupplungselements als auch abschnittsweise von ferromagnetischem Material des zweiten Kupplungselements umschlossen ist, vorzugsweise vollständig umschlossen ist. Eine solche Ausführungsform wird beispielsweise dadurch realisiert, dass der Permanentmagnet in einem Topf mit einem Boden eingelassen ist, während die offene Seite des Topfes von einer Fläche des gegenüberliegenden Kupplungselements angeschlossen wird.

In einer Ausführungsform der Erfindung weist das erste Kupplungselement einen ersten Zentrierabschnitt und das zweite Kupplungselement einen zweiten Zentrierabschnitt auf, wobei der erste und der zweite Zentrierabschnitt komplementär zueinander ausgestaltet sind und wobei der erste und der zweite Zentrierabschnitt derart ausgestaltet sind, dass sie das erste Kupplungselement und das zweite Kupplungselement in radialer Richtung relativ zueinander führen, dass das erste Kupplungselement und das zweite Kupplungselement eine gemeinsame Drehachse aufweisen.

Eine solche Ausgestaltung dient dazu, die Kupplungselemente derart zu zentrieren, dass die Drehachsen und der Kupplungselemente zusammenfallen. Dabei dienen die Zentrierabschnitte der Führung in radialer Richtung ohne aber die Drehmomentübertragung zu beeinflussen.

In einer Ausführungsform der Erfindung sind daher der erste und der zweite Zentrierabschnitt derart ausgestaltet, dass sie eine Drehbewegung des ersten Kupplungselements mit einer ersten Winkelgeschwindigkeit und eine Drehbewegung des zweiten Kupplungselements mit einer zweiten Winkelgeschwindigkeit ermöglichen, wobei die erste Winkelgeschwindigkeit von der zweiten Winkelgeschwindigkeit verschieden ist.

In einer Ausführungsform der Erfindung weist einer der ersten und zweiten Zentrierabschnitte eine Zentrierbuchse und der andere der ersten und zweiten Zentrierabschnitte einen Zentrierzapfen auf, wobei sich der Zentrierzapfen zumindest abschnittsweise in die Zentrierbuchse hinein erstreckt. Es versteht sich, dass in einer Ausführungsform der Erfindung der Zentrierzapfen und die Zentrierbuchse in radialer Richtung eine Spielpassung bilden. Damit nehmen Zentrierzapfen und Zentrierbuchse keinen Einfluss auf das ohne Schlupf der Kupplung übertragene maximale Drehmoment.

In einer Ausführungsform der Erfindung weist zumindest die Zentrierbuchse oder der Zentrierzapfen einen sich zumindest abschnittsweise verjüngenden Querschnitt auf. Auf diese Weise lässt sich eine verbesserte Zentrierwirkung erzielen. Es versteht sich, dass sich die Zentrierbuchse in Richtung auf diejenige Welle hin, mit der das Kupplungselement mit der Zentrierbuchse drehmomentfest verbunden ist, hin verjüngt. Der Zentrierzapfen hingegen verjüngt sich in einer Richtung von derjenigen Welle weg, mit der das Kupplungselement mit dem Zentrierzapfen drehmomentfest verbunden ist.

In einer Ausführungsform der Erfindung weist das erste oder zweite Kupplungselement einen ringförmigen Permanentmagneten auf, wobei der Zentrierzapfen in eine von dem ringförmigen Permanentmagneten umgebene Zentrierbuchse eingreift oder in eine von dem ringförmigen Permanentmagneten gebildete Zentrierbuchse eingreift. Eine solche Ausgestaltung führt zu einer hohen axialen Haltekraft zwischen den beiden Kupplungselementen.

Im Sinne der vorliegenden Erfindung bezeichnet die axiale Richtung und damit auch der Begriff "axial" eine Richtung parallel zu einer Drehachse zumindest der Motorwelle oder der Antriebswelle. In einer Ausführungsform der Erfindung fällt die axiale Richtung mit der Auszugsrichtung zusammen. Entsprechend bezeichnet eine radiale Richtung eine Richtung, die senkrecht auf der axialen Richtung und damit der Drehachse zumindest einer der Wellen steht und diese Drehachse schneidet.

In einer Ausführungsform der Erfindung ist zumindest das erste Kupplungselement oder das zweite Kupplungselement auf die Motorwelle oder die Antriebswelle aufgeklemmt, sodass ein Drehmoment durch einen Kraftschluss zwischen dem jeweiligen Kupplungselement und der jeweiligen Welle übertragbar ist, wobei zwischen dem jeweiligen Kupplungselement und der jeweiligen Welle eine drehmomentfeste Verbindung ausgebildet ist. Ein derartiges Aufklemmen der Kupplungselemente auf die jeweilige Welle ermöglicht eine einfache Montage der Teleskopschiene. Dabei kann das Aufklemmen durch Verpressen erfolgen, aber auch durch ein zusätzliches Befestigungsmittel, beispielsweise das Einschrauben einer Madenschraube in eine Hülse, sodass die Madenschraube mit der jeweiligen Welle in Eingriff ist.

In einer Ausführungsform der Erfindung weist zumindest das erste Kupplungselement oder das zweite Kupplungselement eine sich in axialer Richtung erstreckende Montagehülse auf, wobei sich die Motorwelle oder die Antriebswelle in die Montagehülse hinein erstreckt und wobei die Motorwelle oder die Antriebswelle zumindest kraftschlüssig, formschlüssig oder stoffschlüssig mit der Montagehülse verbunden ist. In einer Ausführungsform der Erfindung ist die Montagehülse auf die jeweilige Welle aufgequetscht.

In einer weiteren Ausführungsform weist in einem montierten Zustand die Motorwelle oder die Antriebswelle ein Übermaß in der radialen Richtung gegenüber der jeweiligen Montagehülse auf. Ein solches Übermaß kann bereits vorhanden sein, bevor die jeweilige Welle in die Montagehülse eingeführt wird. Das Übermaß kann jedoch auch dadurch erzeugt werden, dass die Montagehülse nach dem Einführen der Welle in die Montagehülse durch Verpressen, Quetschen oder thermisch geschrumpft wird.

Weitere Vorteile, Merkmale und Anwendungsmöglichkeiten der vorliegenden Erfindung werden anhand der folgenden Beschreibung von Ausführungsformen und der dazugehörigen Figuren deutlich. In den Figuren sind gleiche Elemente mit gleichen Bezugszeichen bezeichnet.
- Figur 1: ist eine schematische, teilweise weggebrochene Seitenansicht einer Ausführungsform einer erfindungsgemäßen Teleskopschiene.
- Figur 2: ist eine vergrößerte Querschnittsansicht einer Ausführungsform der Magnetkupplung der Teleskopschiene aus Figur 1.
- Figur 3: ist eine teilweise weggebrochene isometrische Ansicht der Magnetkupplung aus Figur 2.
- Figur 4: ist eine vergrößerte Querschnittsansicht einer weiteren Ausführungsform der Magnetkupplung der Teleskopschiene aus Figur 1.
- Figur 5: Ist eine teilweise weggebrochene isometrische Ansicht der Magnetkupplung aus Figur 4.

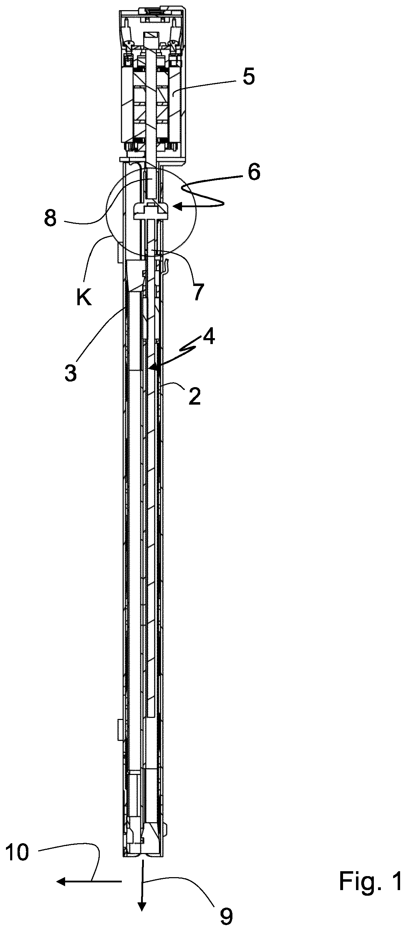

In der in den folgenden Beispielen beschriebenen Ausführungsform ist das lineare Führungssystem eine in Figur 1 dargestellte Teleskopschiene 1. Die Teleskopschiene 1 aus Figur 1 ist ein Teilauszug mit einem ersten äußeren Schienenelement 2 und einem zweiten inneren Schienenelement 3. Bei den Schienenelementen handelt es sich um herkömmliche Schienenelemente mit jeweils einem Schienenrücken und jeweils zwei sich von dem Schienenrücken ausgehend erstreckenden Laufflächen. Zwischen den Laufflächen der beiden Schienenelemente 2, 3 sind Wälzkörper angeordnet, welche auf den Laufflächen abrollen, sodass eine Reibung beim Verschieben der beiden Schienenelemente 2, 3 gegeneinander reduziert ist.

Die Teleskopschiene 1 umfasst neben den beiden Schienenelementen 2, 3 einen Linearantrieb in Form eines Spindeltriebs 4, einen Elektromotor 5 und eine Kupplung 6.

Der Spindeltrieb 4 setzt sich zusammen aus einer Gewindespindel 7 als Abtriebswelle im Sinne der vorliegenden Anmeldung und einer gegenüber der Gewindespindel 7 drehbar an dieser gelagerten Spindelmutter. Die Spindelmutter (in Figur 1 nicht gezeigt) ist mit dem inneren Schienenelement 3 verbunden. Die Gewindespindel 7 ist in axialer Richtung ortsfest aber drehbar an dem äußeren Schienenelement 2 gelagert. Daher führt eine Drehbewegung der Gewindespindel 7 zu einer linearen Bewegung der Spindelmutter und damit des inneren Schienenelements 3.

Dabei bezeichnet die Richtung, in welcher das zweite Schienenelement 3 aus dem ersten Schienenelement 2 herausgeschoben wird, die Auszugsrichtung. Diese ist in Figur 1 mit dem Bezugszeichen 9 versehen. Die Auszugsrichtung 9 fällt mit der Drehachse der Gewindespindel 7 und einer Motorwelle 8 des Elektromotors 5 zusammen. Die Auszugsrichtung 9 wird daher auch als axiale Richtung bezeichnet. Richtungen senkrecht zu der Drehachse der Gewindespindel 7 und der Motorwelle 8 und diese schneidend werden als radiale Richtung bezeichnet.

Der Elektromotor 5 verfügt über eine Motorwelle 8, welche durch die elektrodynamischen Kräfte des Motors angetrieben sich im Betrieb der Teleskopschiene 1 dreht. Diese Motorwelle 8 bildet die Antriebswelle im Sinne der vorliegenden Anmeldung. Das von dem Elektromotor 5 generierte und in die Motorwelle 8 eingeleitete Drehmoment wird mit Hilfe der Magnetkupplung 6 von der Motorwelle 8 auf die Gewindespindel 7 übertragen.

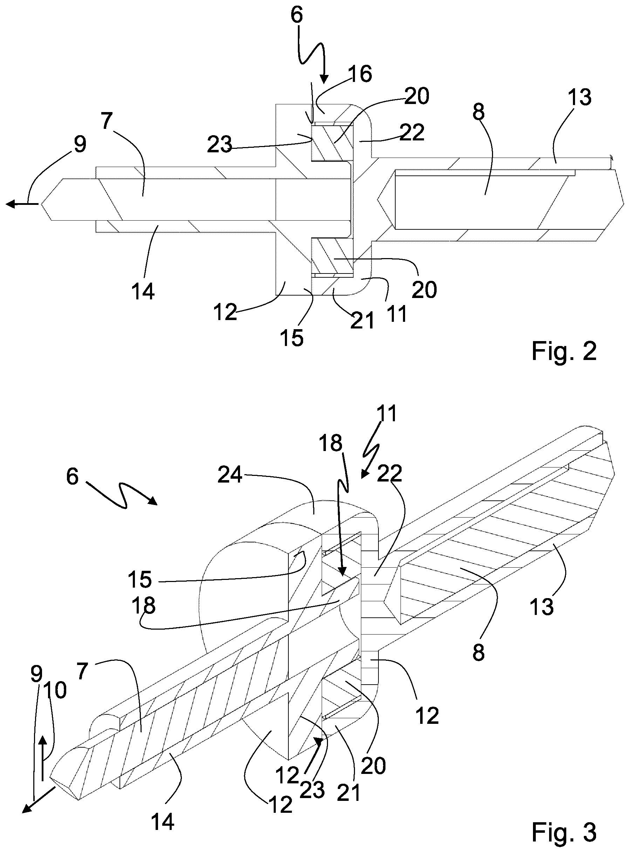

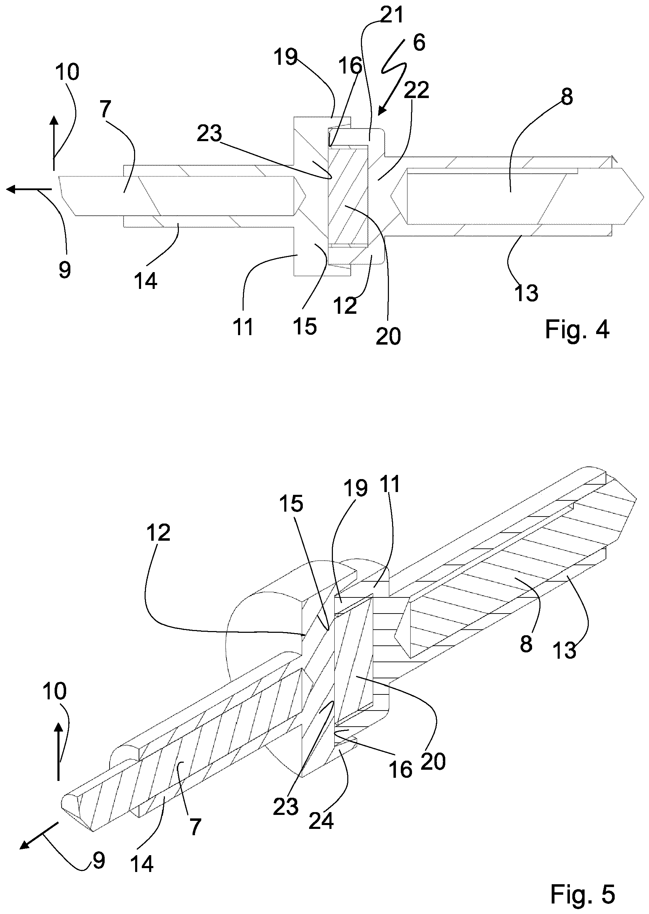

Die Magnetkupplung 6 wird nun anhand von zwei Ausführungsformen davon genauer beschrieben. Diese zwei Ausführungsformen sind in den Figuren 2 bis 4 vergrößert dargestellt. Dabei ist in den Figuren 2 und 3 einer ersten Ausführungsform und in den Figuren 3 und 4 eine zweite Ausführungsform dargestellt. Die Darstellungen sind dem Kreis K der Figur 1 entnommen.

Jede der Magnetkupplungen 6 der Ausführungsformen der Figuren 2 bis 4 umfasst jeweils ein erstes Kupplungselement 11 und ein zweites Kupplungselement 12.

Das erste Kupplungselement 11 ist das motorwellenseitige Kupplungselement. Dieses erste Kupplungselement 11 ist drehmomentfest mit der Motorwelle 8 verbunden. D. h., ein Drehmoment, welches die Motorwelle 8 aufweist, wird ohne Schlupf und Drehmomentverlust von der Motorwelle 8 in das erste Kupplungselement 11 eingeleitet. Die Motorwelle 8 und das erste Kupplungselement 11 drehen immer mit gleicher Winkelgeschwindigkeit. Das zweite Kupplungselement 12 wiederum ist drehmomentfest mit der Gewindespindel 7 verbunden, sodass ein auf das zweite Kupplungselement 12 übertragenes Drehmoment vollständig und ohne Schlupf auf die Gewindespindel 7 übertragen wird. Die Gewindespindel 7 und das zweite Kupplungselement 12 drehen immer mit gleicher Winkelgeschwindigkeit.

Für die drehmomentfesten Verbindungen zwischen dem ersten Kupplungselement 11 und der Motorwelle 8 und dem zweiten Kupplungselement 12 und der Gewindespindel 7 weisen die Kupplungselemente 11, 12 jeweils eine Montagehülse 13, 14 auf. Die Montagehülsen 13, 14 sind hohlzylindrisch, sodass die jeweilige Welle 7, 8 in diese Hülse 13, 14 eingesteckt ist. Nach dem Einstecken sind die Hülsen 13, 14 in linearer Richtung nach innen verpresst worden, sodass die Hülsen 13, 14 kraftschlüssig und drehmomentfest auf der jeweiligen Welle 7, 8 sitzen. Auf diese Weise ist eine einfache Montage der beiden Kupplungselemente 11, 12 auf der jeweiligen Welle 7, 8 gewährleistet.

Bei der Ausführungsform der Figuren 2 und 3 ist die die Montagehülse 13 des ersten Kupplungselements 11 nach Art einer Sackbohrung mit einem Hülsengrund ausgestaltet. Demgegenüber weist die Montagehülse 14 des zweiten Kupplungselements 12 eine einfacher zu fertigende Durchgangsbohrung auf.

Den beiden Ausführungsformen der Magnetkupplung 6 ist gemeinsam, dass die beiden Kupplungselemente 11, 12 in axialer Richtung reibschlüssig miteinander verbunden sind. Die Kraft, welche in axialer Richtung wirkt und den Reibschluss bewirkt, ist eine magnetische Kraft von einem Permanentmagneten 20. In der dargestellten Ausführungsform weist jeweils das erste, motorseitige Kupplungselement einen Permanentmagneten 20 auf, welcher das zweite, spindeltriebseitige Kupplungselement 12 anzieht. Daher wird das erste Kupplungselement 11 auch als Magnetanlaufscheibe bezeichnet und das zweite Kupplungselement 12 als Anlaufscheibe.

Jedes der beiden Kupplungselemente 11, 12 hat eine Reibfläche. Die erste Reibfläche des ersten Kupplungselements 11 ist in den Zeichnungen mit dem Bezugszeichen 15 versehen. Die zweite Reibfläche 16 des zweiten Kupplungselements 12 ist mit der ersten Reibfläche 15 in flächigem Kontakt. Daher wird das von dem ersten Kupplungselement 11 auf das zweite Kupplungselement 12 ohne Schlupf der Kupplung 6 übertragene maximale Drehmoment nicht nur von der magnetischen Kraft des Permanentmagneten 20 bestimmt, sondern darüber hinaus auch von der Fläche der beiden Reibflächen 15, 16, deren Oberflächenbeschaffenheit, insbesondere der Rauheit, und dem Material der Reibflächen.

Die Reibflächen 15, 16 der Magnetkupplung 6 der Ausführungsform aus den Figuren 2 und 3 sind kreisringförmig. Der Permanentmagnet 20 des ersten Kupplungselements 11 der Ausführungsform aus den Figuren 2 und 3 ist ein kreisringförmiger Magnet. Dieser Magnet 20 ist in einen Topf 21 aus ferromagnetischem Stahl eingeklebt. Der Topf 21 weist an seiner der Motorwelle zugewandten Seite einen Boden 22 auf und ist an der zu dem zweiten Kupplungselement 12 hin zeigenden Seite offen. Die Seitenwand 24 des Topfes steht an der dem zweiten Kupplungselement 12 zugewandten Seite gegenüber einer Oberfläche 23 des Magneten 20 über. Daher ist nur die über die Oberfläche 23 des Magneten 20 überstehende Stirnfläche der Seitenwand 24 mit dem zweiten Kupplungselement 12 in Reibeingriff. Diese Stirnfläche der Seitenwand 24 des Topfes 21 bildet somit die erste Reibfläche 15 des ersten Kupplungselements 11.

Die beiden Reibflächen 15, 16 der Ausführungsformen aus Figuren 3 und 4 sind hingegen Kreisflächen. Die Oberfläche 23 des Magneten 20 und die Stirnfläche der Seitenwand des Topfes sind flächenbündig. Der Magnet 20 der Kupplung 6 aus den Figuren 3 und 4 ist ein kreisförmiger Scheibenmagnet.

Die Ausführungsform der Figuren 2 und 3 einerseits und die Ausführungsform der Figuren 4 und 5 andererseits unterscheiden sich auch im Hinblick auf die Zentrierung der beiden Kupplungselemente 11, 12 zueinander.

Jedes der Kupplungselemente 11, 12 weist einen Zentrierabschnitt auf. In der Ausführungsform aus Figuren 2 und 3 ist der erste Zentrierabschnitt des ersten Kupplungselements 11 eine Zentrierbuchse 17, in welche sich ein Zentrierzapfen 18 als Zentrierabschnitt des zweiten Kupplungselements 12 erstreckt. Die Zentrierbuchse 17 wird von zylindrischen Innenwandflächen der Ringmagneten 20 gebildet, während der Zentrierzapfen 18 zylindrische Außenwandflächen aufweist. Die Außenwandflächen des Zentrierzapfens 18 und die Innenwandflächen der Zentrierbuchse 17 bilden zusammen eine Spielpassung, sodass der Zentrierzapfen 18 frei in der Zentrierbuchse 17 drehbar ist, jedoch eine Relativbewegung in radiale Richtung 10 nur innerhalb des begrenzten Spiels möglich ist.

Bei der Ausführungsform aus Figur 4 und 5 ist das zweite, spindeltriebseitige Kupplungselement 12 topfförmig ausgestaltet, sodass die hohlzylindrische Wand 19 des Topfes als Zentrierabschnitt einen Zentrierabschnitt des zylinderförmigen ersten Kupplungselements 11 aufnimmt. Wieder bilden das erste Kupplungselement 11 und die hohlzylindrische Wand 19 des Topfes des zweiten Kupplungselements 12 eine Spielpassung, um das von dem ersten Kupplungselement 11 auf das zweite Kupplungselement 12 ohne Schlupf übertragene maximale Drehmoment möglichst wenig zu beeinflussen. Wie aus der Darstellung der Figur 4 ersichtlich, weist der Topf des zweiten Kupplungselements 12 einen sich in Richtung der Gewindespindel 7 verjüngenden Querschnitt auf. Au diese Weise wird die Zentrierung der beiden Kupplungselemente 11,12 zueinander erleichtert, wenn sich die beiden Kupplungselemente 11, 12 einmal in axialer Richtung voneinander entfernen.

Für Zwecke der ursprünglichen Offenbarung wird darauf hingewiesen, dass sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit es nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

Während die Erfindung im Detail in den Zeichnungen und der vorangehenden Beschreibung dargestellt und beschrieben wurde, erfolgt diese Darstellungsbeschreibung lediglich beispielhaft und ist nicht als Beschränkung des Schutzbereichs gedacht, so wie er durch die Ansprüche definiert wird. Die Erfindung ist nicht auf die dargestellten Ausführungsformen beschränkt.

Abwandlungen der offenbarten Ausführungsformen sind für den Fachmann aus den Zeichnungen, der Beschreibung und den beigefügten Ansprüchen offensichtlich. In den Ansprüchen schließt das Wort "aufweisen" nicht andere Elemente oder Schritte aus, und der unbestimmte Artikel "eine" oder "ein" schließt eine Mehrzahl nicht aus. Die bloße Tatsache, dass bestimmte Merkmale in unterschiedlichen Ansprüchen beansprucht sind, schließt ihre Kombination nicht aus. Bezugszeichen in den Ansprüchen sind nicht als Beschränkung des Schutzbereichs gedacht.

### Bezugszeichenliste

- 1: Teleskopschiene
- 2: erstes Schienenelement
- 3: zweites Schienenelement
- 4: Spindeltrieb
- 5: Elektromotor
- 6: Kupplung
- 7: Gewindespindel,
- 8: Motorwelle
- 9: axiale Richtung
- 10: radiale Richtung
- 11: erstes Kupplungselement
- 12: zweites Kupplungselement
- 13, 14: Montagehülse
- 15: erste Reibfläche
- 16: zweite Reibfläche
- 17: Zentrierbuchse
- 18: Zentrierzapfen
- 19: hohlzylindrische Wand
- 20: Permanentmagnet
- 21: Topf
- 22: Boden
- 23: Oberfläche des Magneten
- 24: Seitenwand des Topfes

## Patentansprüche

1. Lineares Führungssystem (1) mit
mindestens einem ersten Schienenelement (2) und einem zweiten Schienenelement (3),
wobei das erste Schienenelement (2) und das zweite Schienenelement (3) in und entgegen einer Auszugsrichtung (9) linear gegeneinander verschiebbar aneinander gelagert sind,
einem Elektromotor (5),
einer Antriebswelle (8), wobei die Antriebswelle (8) derart wirksam mit dem Elektromotor (5) gekoppelt ist, dass der Elektromotor (5) in einem Betrieb des linearen Führungssystems (1) die Antriebswelle (8) in eine Rotationsbewegung versetzt,
einem Linearantrieb (4),
wobei der Linearantrieb (4) eine Abtriebswelle (7) aufweist und
wobei der Linearantrieb (4) derart ausgestaltet ist, dass eine Drehbewegung der Abtriebswelle (7) eine lineare Bewegung der ersten und zweiten Schienenelemente (2, 3) in oder entgegen der Auszugsrichtung (9) relativ zueinander bewirkt, und
einer Kupplung (6),
wobei die Kupplung (6) die Antriebswelle (8) und die Abtriebswelle (7) derart miteinander verbindet, dass die Kupplung (6) ein Drehmoment von der Antriebswelle (8) auf die Abtriebswelle (7) überträgt,
**dadurch gekennzeichnet, dass**
die Kupplung eine Magnetkupplung (6) mit
einem ersten Kupplungselement (11) und
einem zweiten Kupplungselement (12) ist,
wobei das erste Kupplungselement (11) drehmomentfest mit der Antriebswelle (8) verbunden ist und
wobei das zweite Kupplungselement (12) drehmomentfest mit der Abtriebswelle (7) verbunden ist.

2. Lineares Führungssystem (1) nach dem vorhergehenden Anspruch, wobei zumindest das erste Kupplungselement (11) oder das zweite Kupplungselement (12) einen Permanentmagneten (20), vorzugsweise einen in einem ferromagnetischen Topf angeordneten Permanentmagneten (20) aufweist.

3. Lineares Führungssystem (1) nach einem der vorhergehenden Ansprüche, wobei das erste Kupplungselement (11) und das zweite Kupplungselement (12) aufgrund einer magnetischen Kraft kraftschlüssig miteinander in Eingriff sind.

4. Lineares Führungssystem (1) nach dem vorhergehenden Anspruch, wobei das erste Kupplungselement (11) eine erste Reibfläche (15) aufweist und das zweite Kupplungselement (12) eine zweite Reibfläche (16) aufweist, wobei vorzugsweise die erste Reibfläche (15) senkrecht zu der Motorwelle (8) ist und die zweite Reibfläche (16) senkrecht zu der Abtriebswelle (7) ist, und wobei die erste Reibfläche (15) und die zweite Reibfläche (16) miteinander in Reibeingriff sind, sodass das Drehmoment durch einen Reibschluss zwischen der ersten Reibfläche (15) und der zweiten Reibfläche (16) von der Antriebswelle (8) auf die Abtriebswelle (7) übertragen wird.

5. Lineares Führungssystem (1) nach einem der vorhergehenden Ansprüche, wobei nur das erste Kupplungselement (11) oder nur das zweite Kupplungselement (12) einen Permanentmagneten (20) aufweist, wobei der Permanentmagnet (20) derart angeordnet ist, dass der Permanentmagnet sowohl abschnittsweise von ferromagnetischem Material des ersten Kupplungselements (11) als auch abschnittsweise von ferromagnetischem Material des zweiten Kupplungselements (12) umschlossen ist, vorzugsweise vollständig umschlossen ist.

6. Lineares Führungssystem (1) nach einem der vorhergehenden Ansprüche, wobei das erste Kupplungselement (11) einen ersten Zentrierabschnitt (17) aufweist und das zweite Kupplungselement (12) einen zweiten Zentrierabschnitt (18) aufweist, wobei der erste und der zweite Zentrierabschnitt (17, 18) komplementär zueinander ausgestaltet sind und wobei der erste und der zweite Zentrierabschnitt (17, 18) derart ausgestaltet sind, dass sie das erste Kupplungselement (11) und das zweite Kupplungselement (12) in radialer Richtung (10) relativ zueinander führen, dass das erste Kupplungselement (11) und das zweite Kupplungselement (12) eine gemeinsame Drehachse aufweisen.

7. Lineares Führungssystem (1) nach dem vorhergehenden Anspruch, wobei der erste und der zweite Zentrierabschnitt (17, 18) derart ausgestaltet sind, dass sie eine Drehbewegung des ersten Kupplungselements (11) mit einer ersten Winkelgeschwindigkeit und eine Drehbewegung des zweiten Kupplungselements (12) mit einer zweiten Winkelgeschwindigkeit ermöglichen, wobei die erste Winkelgeschwindigkeit von der zweiten Winkelgeschwindigkeit verschieden ist.

8. Lineares Führungssystem (1) nach Anspruch 6 oder 7, wobei einer der ersten und zweiten Zentrierabschnitte eine Zentrierbuchse (17) bildet und der andere der ersten und zweiten Zentrierabschnitte einen Zentrierzapfen (18) bildet, wobei der Zentrierzapfen (18) sich zumindest abschnittsweise in die Zentrierbuchse (17) hinein erstreckt.

9. Lineares Führungssystem (1) nach dem vorhergehenden Anspruch, wobei der Zentrierzapfen (18) und die Zentrierbuchse (17) in der radialen Richtung (10) eine Spielpassung bilden.

10. Lineares Führungssystem (1) nach Anspruch 8 oder 9, wobei zumindest die Zentrierbuchse (17) oder der Zentrierzapfen (18) einen sich zumindest abschnittsweise verjüngenden Querschnitt aufweisen.

11. Lineares Führungssystem (1) nach einem der vorhergehenden Ansprüche, wobei zumindest das erste Kupplungselement (11) oder das zweite Kupplungselement (12) auf die Antriebswelle (8) oder die Abtriebswelle (7) aufgeklemmt ist, sodass ein Drehmoment durch einen Kraftschluss zwischen dem jeweiligen Kupplungselement (11,12) und der jeweiligen Welle (7, 8) übertragbar ist, wobei zwischen dem jeweiligen Kupplungselement (11, 12) und der jeweiligen Welle (7, 8) eine drehmomentfeste Verbindung ausgebildet ist.

12. Lineares Führungssystem (1) nach einem der vorhergehenden Ansprüche, wobei zumindest das erste Kupplungselement (11) oder das zweite Kupplungselement (12) eine sich in axialer Richtung (9) erstreckende Montagehülse (13, 14) aufweist, wobei sich die Antriebswelle (8) oder die Abtriebswelle (7) in die Montagehülse (13, 14) hinein erstreckt und wobei die Antriebswelle (8) oder die Abtriebswelle (7) zumindest kraftschlüssig, formschlüssig oder stoffschlüssig mit der Montagehülse (13, 14) verbunden ist.

13. Lineares Führungssystem (1) nach dem vorhergehenden Anspruch, wobei in einem montierten Zustand die Antriebswelle (8) oder die Abtriebswelle (7) ein Übermaß in der radialen Richtung gegenüber der jeweiligen Montagehülse (13, 14) aufweist.
